# EUROPEAN PATENT APPLICATION

(11) **EP 2 075 459 A2**
(43) Date of publication of application: **01.07.2009**
(21) Application number: 08172590.5
(22) Date of filing: 22.12.2008
(51) Int. Cl.: F03D 1/06

(54) **Multiple rotor windmill and method of operation thereof**

(30) Priority: 29.12.2007 BY 20071660
(71) Applicant: Klimov, Vyacheslav Stepanovich, 220044 Minsk (BY); Klimov, Oleg Vyacheslavovich, 3001 Elgava (BY)
(72) Inventor: Klimov, Vyacheslav Stepanovich, 220044 Minsk (BY); Klimov, Oleg Vyacheslavovich, 3001 Elgava (BY)
(74) Representative: Kliment, Peter

(57) **Abstract**

The hub of the horizontal axis contains rotors rigidly attached in the radial direction by their own axes on the ground of logarithmic spiral-shaped load-bearing elements that rotate in response to the force of ram pressure and as it rotates in a wind flow around it generates lateral aerodynamic force arisen due to the Magnus effect; the total quantity thereof creates a rotary moment of the horizontal axis.

## Description

A multiple-rotor windmill and a method of operation thereof relates to wind power engineering and is meant for converting wind flow kinetic energy into rotational mechanical energy.

A multiple-rotor windmill is a wind-driven horizontal axis wheel, wherein the hub thereof comprises radially fixed axes of rotor windmills with logarithmic spiral-shaped load-bearing elements.

The operating principle of a multiple-rotor windmill is based on simultaneous use of the force of ram pressure of a wind flow agitating radial rotors and lateral aerodynamic force arisen due to the Magnus effect as radial rotors rotate in the wind flow around them. The combined effect of these forces creates a rotary moment of the horizontal axis.

Known are propeller-type horizontal axis windmills comprising fixed radial blades that produce rotational energy from the force of ram pressure of a wind flow and lateral aerodynamic force that comes out in small portion when there is a wind flow around the blade /1, p. 78-87/. However the combined value of a rotary moment communicated by propeller-type windmills to a horizontal axis leaves much to be desired.

Known are the windmills comprising cylindrical radial rotors, wherein rotation thereof is provided by turbulence promoters in the form of tubes mounted on the outer sides of rotating cylinders /2/. But due to complexity of the structure thereof and low efficiency thereof these devices have not spread.

The proposed invention is aimed at creating a powerful windmill capable of providing high efficiency of conversion of kinetic energy into mechanical energy in a wide range of wind velocities.

In order to achieve the purpose in view as radial load-bearing elements used are the rotors that have approved themselves in vertical axis windmills, wherein the load-bearing elements thereof are shaped like a logarithmic spiral arc and allow effective rotation of the structure directly in response to a wind flow without using any outer energy or any other secondary structures upon the working rotor devices / 3 /.

However if used in vertical structures these rotors cannot be used for horizontal axis windmills since presence of only one discharge jet to let out the used air mass sufficient for providing technological process in vertical position when rotors rotate continuously around a horizontal axis, fails to provide consistency in the velocity of rotation of radial rotors around their own axis. Their angular velocity fails and consequently, generated lateral aerodynamic force falls down.

In order to remedy this deficiency the face plane of the rotors is equipped with identical symmetrical discharge jets, that forms the essence of the invention.

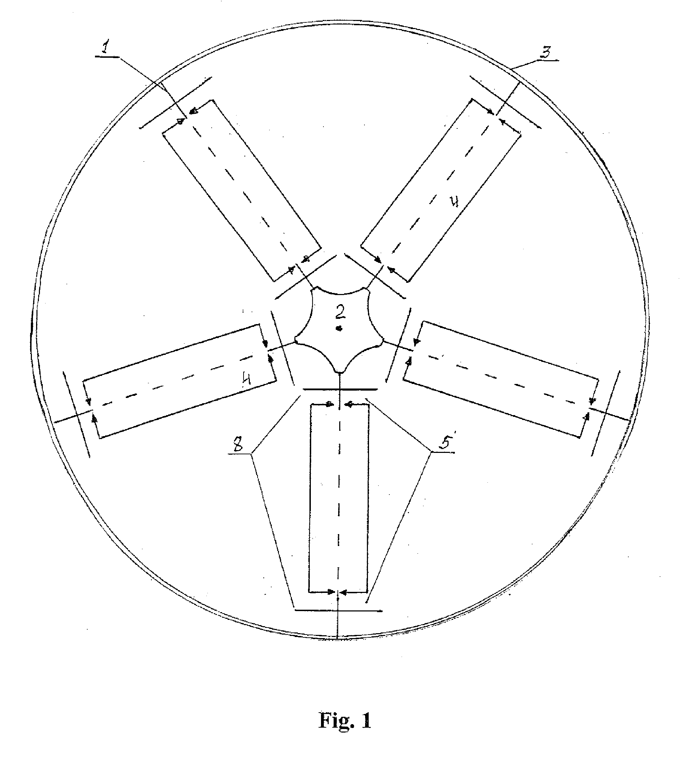

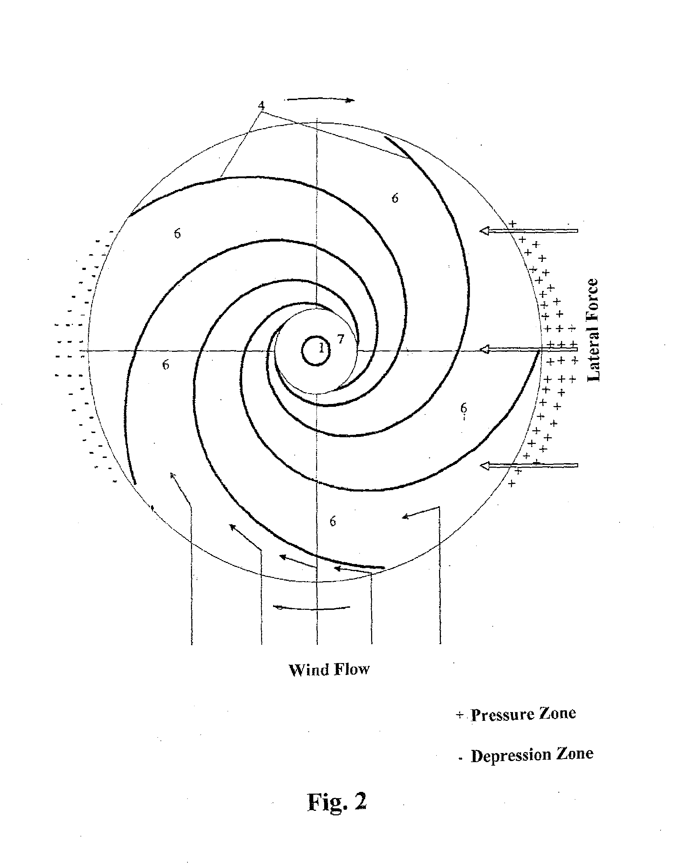

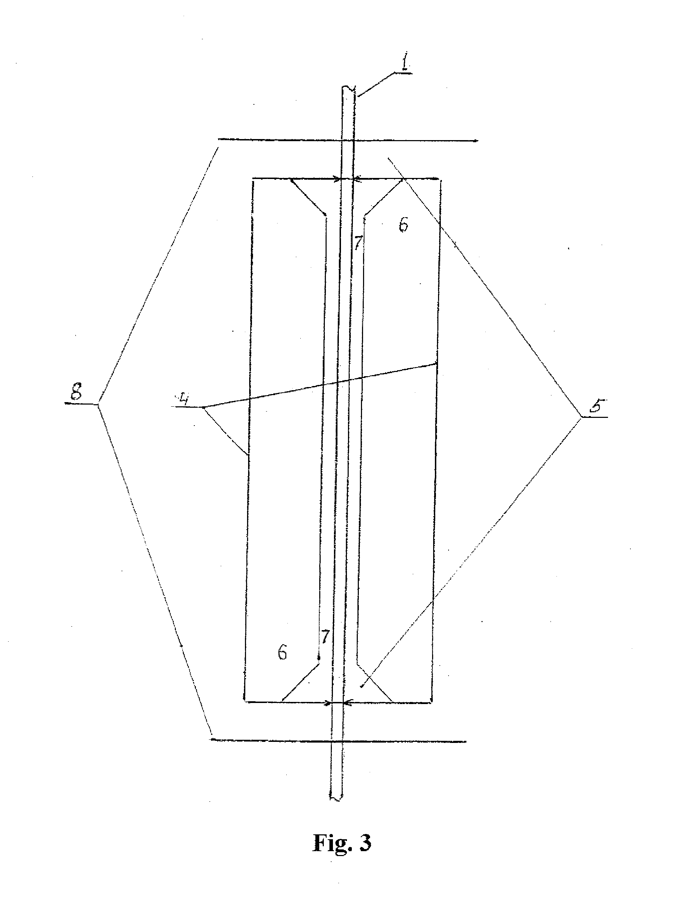

The view of the multiple-rotor windmill is shown in Fig. 1, the section view of the radial rotors - in Fig. 2, 3.

The reference numbers refer to:
1- axis of the radial rotor;
2- hub of the horizontal axis;
3- rim of the outer attachment;
4- load-bearing elements of radial rotors;
5- discharge jets of radial rotors;
6- air collectors of radial rotors;
7- air transfer duct of radial rotors
8- end plates.

The wind flow entering air collectors 6 of radial rotors affect load-bearing elements 4 by force of their pressure and gear the radial rotors around their own axis 1 rigidly mounted in the hub 2 of the horizontal axis and outer rim of wind wheel 3. As radial rotors rotate in the wind flow around them due to the Magnus effect there appears lateral aerodynamic force /4, p. 201 /, the total amount thereof as defined by the number of rotated radial rotors cause the wind wheel to move creating a powerful rotary moment of the horizontal axis.

From air collectors 6 the wind mass of the wind flow enters air transfer duct 7 and through discharge jets 5 flows out into the medium. Presence of identical symmetrical discharge jets along the face plane of the radial rotors allows, irrespective of their position in the interspace in rotary mode of the wind wheel providing a uniform flow of air mass; generated lateral aerodynamic force and consequently capacity being kept permanent.

Using inexpensive materials and parts the authors invented the acting model of a multiple-rotor windmill and tested it. The testing results confirmed unambiguously high efficiency of conversion of kinetic energy of a natural wind flow into mechanic energy of high-power rotation, operation capability at the lowest velocities of wind inaccessible to all the known devices of analogous purpose.

### Literature:

1. Peter M. Moretti, Louis V. Divone. Modern Windmills. In the World of Science. 1986/Nº8.
2. Patent of the Russian Federation RU 2118699.
3. Patent of the Republic of Belarus BY8019.
4. The Great Soviet Encyclopedia, V. 15, 3-rd Edition, M., 1974.

## Claims

1. Multi-rotor horizontal axis windmill comprising a number of uniform radial rotors on the ground of logarithmic spiral-shaped load-bearing elements evenly distributed in the plane of a circle, wherein the axes of the rotors are rigidly fixed in the hub of the horizontal axis, **characterized in that** in order to allow steady interaction between a wind flow and a structure of radial rotors in the process of constant repositioning in the interspace when rotating around the horizontal axis, along both the face planes each radial rotor is equipped with identical symmetrical discharge jets.

2. Method of operation of the multi-rotor windmill according to claim 1, **characterized in that** the windmill is started by the force of ram pressure on the radial rotors and a rotary moment of the horizontal axis is created by a combined effect of lateral aerodynamic force arisen due to the Magnus effect when the radial rotors rotate in the wind flow around them.
